# EUROPEAN PATENT SPECIFICATION

(11) **EP 2 753 855 B1**
(45) Date of publication and mention of the grant of the patent: **18.05.2022**
(21) Application number: 12756239.5
(22) Date of filing: 31.08.2012
(51) Int. Cl.: F16K 41/04

(54) **A LOW EMISSION VALVE ASSEMBLY**
VENTILANORDNUNG MIT GERINGER EMISSION
ENSEMBLE SOUPAPE À FAIBLE ÉMISSION

(30) Priority: 06.09.2011 GB 201115376
(43) Date of publication of application: 16.07.2014
(73) Proprietor: Parker Hannifin Manufacturing Limited, Barnstaple, Devon EX31 1NP (GB)
(72) Inventor: NICHOLSON, Spencer Andrew, Barnstaple Devon EX31 1NP (GB); TOMLINSON, Justin Charles, Bideford Devon EX39 2RA (GB); JACEK, Sroka, Barnstaple Devon EX32 9JU (GB); MATTHEW, Weinle, Cromer Norfolk NR27 9AP (GB)
(74) Representative: Jones, David Alan
(86) International application number: PCT/GB2012/052129
(87) International publication number: WO 2013/034891

(56) References cited:
- US-A- 2 169 410
- US-A- 2 912 266
- US-A- 4 576 385
- US-A- 5 263 682
- US-A- 5 335 691
- US-A- 5 593 166
- US-A1- 2004 155 217

## Description

The present invention relates to a valve assembly. In particular, the invention relates to a valve assembly including a bore and a valve spindle which is suitable for connecting to a process line or pressure vessel and which is arranged to limit fugitive emissions from the valve bore.

Within the instrumentation industry, it is necessary to take fluid from a fluid container such as a process pipeline or pressure vessel, so as to take measurements of quantities such as pressure, temperature, flow and fluid level measurements.

The instruments which are used to take such measurements are typically connected to a fluid container by a system of pipes, manifolds and valves. The connection system can include one or more tapping connections for tapping the fluid container.

The instruments which are used to take such measurements require maintenance, such as calibration. In order to carry this out it is necessary to modify or close the flow of the fluid between the fluid container and the instrument. Such flow modification is currently carried out by a number of methods all of which in some way require systems which are attached to the main process apparatus by means of a valve. A shutoff or metering valve designed to prevent the fluid it controls from escaping to the atmosphere is commonly referred to as a packing valve. The escape of gas is typically prevented by means of a stem that rotates or moves within its seal material during actuation. The dynamic seal interface separates the medium from the atmosphere.

There is a trend to legislate to regulate emissions of potentially harmful substances to the environment, for example the EU's IPPC directive 96/61/EC aimed at minimising pollution from various industrial sources throughout the European Union. An important part of this legislation is reducing fugitive emissions, which will have significant consequences for all processes. According to the IPPS all plants and factories which fail to comply with the standards set by the directive may be closed from this point.

A typical European refinery loses between 600 and 10,000 tonnes of emissions per annum. Around 70% of these losses are estimated to be caused by plant equipment such as pipe flanges, pumps, valves and vessels. Leakage from valves is often the biggest source, reportedly accounting for around 50% of the fugitive emissions within the chemical and petrochemical industries.

Irrespective of the environmental impact, there is a tremendous financial burden on industry because fugitive emissions represent a huge loss of product, and cause of plant inefficiency. However, the true costs to industry are not always appreciated, as many of the costs associated with fugitive emissions are hidden, such as labour and materials to repair leaks, wasted energy, environmental fines and clean up costs, lost sales due to a poor green image, claims for personal injury and more. In this way, reducing fugitive emissions not only protects the environment, but can save companies time and money.

US 5 263 682 A describes a valve according to the preamble of claim 1. A further valve relevant to the subject-matter of claim 1 is US 5 593 166 A.

UK patent number 2451137 describes a valve configured to reduce fugitive emissions in which a pair of o-ring seals is provided on system end of a valve spindle between the spindle and the bore of the valve body. Expansion of the dual o-ring arrangement provides effective fugitive emissions sealing, while a further fire safe back up gland seal is provided in that temperature and/or pressure exceeds the operational range of the o-rings.

For certain high temperature and high pressure applications, it not desirable or not legally permitted to provide o-ring seals formed from an elastomeric material, as the o-ring material is not capable of withstanding the operational conditions. In other application, environmental conditions may be such that o-ring seals are not suitable due to degradation or wear.

It is therefore desirable to provide an alternative valve arrangement which addresses the above described problems and/or which offers improvements generally.

According to the present invention there is provided a valve assembly as described in the accompanying claims.

It is therefore desirable to provide an alternative valve arrangement which addresses the above described problems and/or which offers improvements generally.

According to the present invention there is provided a valve assembly as described in the accompanying claims.

In an embodiment of the invention there is provided a valve assembly for controlling flow through a fluid pathway comprising a valve body having a bore; a spindle received within the bore which is actuatable to open and close the valve, the spindle having an axially upstream end arranged towards the fluid pathway and an opposing downstream end; a first seal provided about the spindle between the spindle and the bore; and a biasing element arranged to impart an axial compressive force to the sealing element. The biasing member is located within the valve body between the spindle and the bore on the downstream side of the seal. Conventionally any seal biasing means is provided externally to the valve body on the dry side of the valve. However, it has been found that by providing the seal biasing means within the valve boy enables a more direct compressive force to be applied to the seal which significantly improves the sealing efficiency. The provision of a live loaded flow-side seal which is internal to the valve is therefore highly advantageous but has not previously been considered.

The first seal preferably comprises a first section formed of a first material and a second section formed of a second material which is softer than the first material, the first and second sections being arranged such that when the first seal is axially compressed the second material is caused to cold flow between the first section and the bore to increase the efficiency of the first seal. The first section acts as a supporting and/or reinforcing section to prevent excessive deformation of the softer second section. As the second section compresses the softer material cold flows and wicks between the first section and the bore which acts to fill any remaining gap between the second section and the bore thereby increasing the sealing efficiency. As such, the valve may be assembled with the first seal closely toleranced with the spindle and the bore but no so close as to inhibit assembly, with the tolerance then being greatly increased on loading of the first seal. This type of compression sealing therefore enables highly efficient sealing without the requirement for axially opposed contact points. In addition, by providing end rings at both ends provides increased sealing at both end of the seal due to the clod flow of the softer second seal section.

The first material is preferably polyether ether ketone (PEEK) and the second material is preferably Polytetrafluoroethylene (PTFE), with the PTFE material being softer than the PEEK while both materials include the required high melting points.

The valve assembly preferably further comprises a collar axially located about the spindle on the downstream side of the first seal between the first seal and the biasing element which is arranged to compress the seal under the action of the biasing element.

The valve assembly further comprises a second seal provided about the spindle between the spindle and the bore which is axially spaced along the spindle at a position downstream from both the first sealing element and the biasing element. The valve assembly further comprises secondary biasing means for imparting a compressive force to the second seal. The second seal provides a back up sealing means for sealing against any emissions which have passed the first seal thereby further reducing fugitive emissions.

The valve assembly further comprises a guide member axially fixed relative to the valve body and an axially movable clamping member slidingly supported on the guide member and about the spindle at a downstream axial position from the second seal. The secondary biasing means urges the clamping member towards the second seal to impart said compressive force thereto. This means of biasing the second seal is provided externally to the valve body and is therefore accessible and adjustable by the operator.

The valve assembly may further comprise a slidable collar provided about the spindle between the second seal and the clamping member such that the collar is urged into engagement with the second seal by the clamping member to impart said compressive force thereto.

The valve assembly may further comprise a slidable collar provided about the spindle between the second seal and the clamping member such that the collar is urged into engagement with the second seal by the clamping member to impart said compressive force thereto.

The second seal is preferably a back up fire-safe seal formed from a material having a melting point greater than the material of the first seal. This enables the valve to utilise thermoplastic flowable materials for the first seal to increase sealing efficiency while also providing a fail safe seal in the event of temperatures approaching or exceeding the melting point of PEEK or PTFE thereby enabling the valve to meet both the relevant emissions and temperature safety standards.

The body section preferably comprises a lower section axially located at the flow wise upstream end of the valve assembly and an upper section axially located at the flow wise downstream end and the collar and biasing element are located within the lower body section and the biasing element is axially compressed against the collar by the a portion of the upper body section.

A third seal is provided between the upper and lower body sections on the downstream side of the first seal.

The third seal is formed from a material having a higher melting point than the material of the first seal. The second and/or third seals are preferably formed from a graphite material.

The valve body includes an inlet and an outlet and the spindle is actuatable to open and close the bore to selectively permit fluid flow between the inlet and the outlet.

The valve assembly may further include a chamber section located downstream of the first seal between the first seal and the biasing element which includes an expanded diameter defining an inner wall which is spaced from the spindle and the collar. The chamber is arranged to collect solid material present in any sour gas which may pass then first seal to prevent spoiling of the biasing element.

The biasing element is preferably a spring and more preferably comprises series of coned disc springs such as Bellville springs.

The present invention will now be described by way of example only with reference to the following illustrative figures in which:
Figure 1 is a cross sectional view of a valve assembly according to an embodiment of the invention; and
Figure 2 is a detailed view of the first seal assembly of the valve of figure 1.

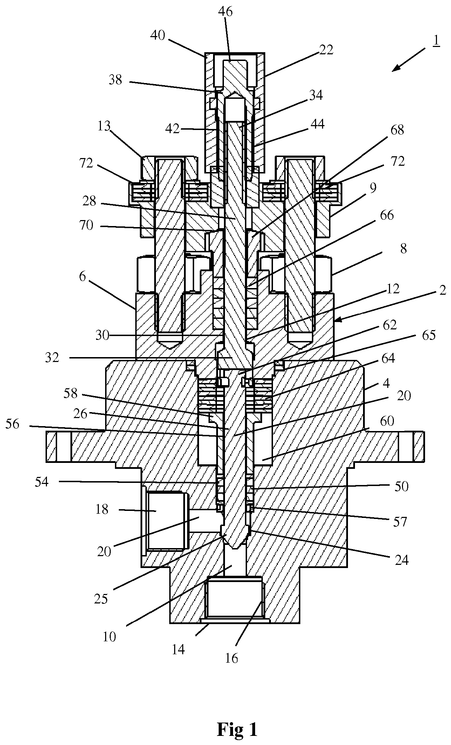

Referring to FIG 1, there is provided a needle valve 1. Reference to a needle valve should be construed broadly to cover any valve arrangement including a spindle including a valve element which moves translationally within a bore in order to open and close the valve. The valve 1 includes a substantially cylindrical valve body 2, which comprises a lower valve body section 4 which defines the system side of the valve body 2 and connects to a pressure line or vessel. The valve body 2 further includes an upper valve body section 6 which is secured to the lower valve body section 4 by bolts 8. The valve body section 2 includes an inner bore 10 comprising a lower bore 11 extending through the lower body section 6 and an upper bore 12 extending through the upper body section 6. The lower bore 11 and upper bore 12 are contiguous and aligned such that they share a common longitudinal axis. An upper gland adjuster body 9 is connected to the upper section 8 of the valve body 2 by bolts 13. The longitudinal axial position of the gland adjuster body 4 with respect to the valve body 2 is adjustable via the bolts 13.

The terms 'upper' and 'lower' are used relatively with regard to the pressurised system side of the valve, with the pressurised proximal end of the valve being referred to as the lower end, and the distal end which is accessible by the operator in use being referred to as the upper end. Similarly, the terms 'upstream' and 'downstream' refer to the end of the valve associated with the pressurised system to be closed by the valve and the opposing end respectively.

A valve inlet 14 is defined at the distal end of the lower valve body section 4 which is in fluid connection with the distal end of the bore 10. The inner wall of the inlet 14 includes a threaded portion 16 for connecting the valve to the process line or pressure vessel. The inlet 14 comprises an expanded diameter bore which is wider than the bore 10 at the point the bore 10 adjoins the inlet 14. An outlet 18 is longitudinally spaced from the inlet 14 along the bore 10 away from the distal end. The outlet 18 is arranged perpendicular to the inlet 14, and is connected to the bore 10 by an interconnecting radial bore section 20 which extends transversely to the longitudinal axis of the bore 10.

A non-rotating valve spindle 20 is positioned within the axial bore 10 of the valve body 2, and also passes through an axial bore in an upper gland adjuster body 26 towards its distal end. The spindle is connected at its distal end with a manually (or machine) operable actuator 22 (such as a handle or T bar). At its proximal end the spindle 20 comprises a tapered valve tip 24 which seals against a corresponding tapered seat 25 formed by the wall of lower bore 12 between the outlet 18 and the inlet 16 to seal tight the flowpath between the inlet 16 and outlet 18 when the valve is in the closed position. The spindle 20 includes a lower stem portion 26 and an upper stem portion 28, the lower stem portion having the valve tip 24 at its free lower end and being connected to the upper stem portion 28 at its upper end. The lower stem portion 26 is connected to the upper stem portion 28 in such a way that it is freely rotatable relative thereto, and such that upper portion 28 is able to actuate the lower portion in an axial direction only.

An annular projection 30 extends inwardly within the lower part of the upper bore 12 defining a section of the bore of reduced diameter which is approximately equal to the diameter of the upper stem section 28 such that the upper stem section slidingly fits within the projection 30 in a closely toleranced manner. The upper stem portion 28 includes a diametrically expanded lower end 32 which is located on the lower side of the projection 30. The projection 30 acts as a stop to limit axial movement of the spindle 20 in the upwards direction through engagement between the expanded end 32 of the upper stem portion 28.

The upper stem portion 28 is provided with a threaded portion 34 on the outer surface of it's upper end, which is engaged with a corresponding threaded portion 36 on the inner surface of an intermediate sleeve 38 of the actuator 22. The outer thread 34 of the upper stem portion 28 and the inner thread 36 of the intermediate sleeve is preferably an M6 left hand thread. The actuator 22 further includes an outer sleeve section 40 having a thread on its inner surface which engages with a corresponding thread 44 on the outer surface of the intermediate sleeve 38. The inner thread 42 of the outer sleeve 40 and the outer thread 36 of the intermediate sleeve is preferably an M10 right hand thread. The outer sleeve 40 is fixed relative to the upper gland adjuster 9, which is fixed relative to the valve body.

The upper of the intermediate sleeve 38 is provided with a square section male projection 46 which is configured to be received by a corresponding female recess in a turn handle or similar tool to provide a rotational fixing for effecting rotation of the intermediate sleeve 38 by the turn handle. As the direction of the corresponding threads between the cap 40 and the intermediate sleeve 38 is formed in a different direction to corresponding threads between the intermediate sleeve 38 and the upper stem portion 28, rotation of the intermediate sleeve 38 causes it to move axially relative to the fixed outer sleeve 40 and the valve body 2 which causes corresponding axial translation of the valve spindle 12. The expanded head 32 of the upper stem portion 28 is formed having diametrically opposed flat sections on the side wall thereof, which engage with corresponding flat portions formed on the inner surface of the bore 10 which interact to prevent rotation of the upper stem portion 28. As such, the spindle 12 is only moved by the actuator 22 in an axial direction.

The valve 1 is moved to the open position when actuator 22 is rotated to move the valve spindle 12 axially upwards such that the valve tip 24 lifts away from the valve seat 25 to open the fluid pathway between the inlet 16 and the outlet 18. To prevent pressurised fluid from escaping the valve 1 between the valve spindle 12 and the bore 10 a first seal assembly 50 is provided between the bore valve spindle 12 and the bore 10 towards the lower proximal end of the valve spindle 12 at an axial location above the seat 25 and above the intersection of the outlet radial bore section 20 and the bore 10. A step section 25 in the bore axially locates the seal assembly 50. The location of the seal assembly 50 is such that when the valve spindle 12 is in the open position the first seal assembly 50 is directly subjected to the system pressure from the flow channel to which the valve 1 is connected. To protect the thread between the intermediate sleeve 38 and the outer sleeve section 40 and prevent the ingress of dirt, oil and other contaminants which may foul the thread, a wiper 45 is provided. The wiper 45 is provided about the intermediate sleeve section 38 between the intermediate sleeve 38 and the outer sleeve 40 and is received in a groove in the outer sleeve section 40 and seals the thread from the atmosphere. As the intermediate sleeve moves axially relative to the outer sleeve 40, the wiper 45 remains stationary relative to the outer sleeve 40 and wipes and material which has accumulated on the intermediate sleeve 38 on its external outer surface.

The portion of the spindle 12 between the second locking collar 68 and the actuator 22 is exposed as it extends out of the bore 10. To protect this portion of the spindle 12 and to prevent the ingress of material into the more 10, a gator 47 is provided about the spindle. The gator 47 is configured to compress and expand as the intermediate sleeve moves axially.

The wiper 45 and/or the gator 47 are formed from a natural material such as wool. Preferably they are formed from compressed woollen fibres in the form of felt. Typically such components are formed of rubber or similar elastomeric material. However, such material is known to degrade and perish over time. It has been surprisingly found that the felt wiper 45 and gator 47 not only have a longer life span but actually improve during use as they saturate. In addition, the felt material provides significantly improved fire retardant properties.

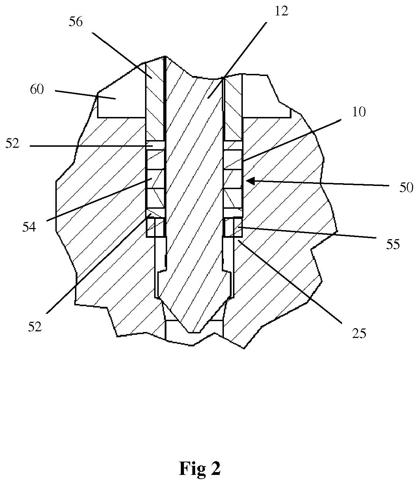

As shown in FIG 2, the first seal assembly 50 comprises outer reinforcement rings 52 located at the upper and lower ends of the seal assembly 50. Sandwiched between the upper and lower reinforcing rings 52 is a plurality of sealing rings 54 formed from a softer material than the reinforcement rings 52. The lower reinforcement rings 52 seats against a stop ring 55 which is seated on the step 25, and which axially fixes the first seal assembly 50 in the downward axial direction. A locking collar 56 is provided about the valve spindle 12 at a position axially above the first seal assembly 50 between the valve spindle 12 and the bore 10. The lower end of the collar 56 abuts the axially upper surface of the upper reinforcing ring 52. At its upper end the collar includes a flared flanged section 58. The locking collar 56 and the stop ring 55 are preferably both formed from the same material and preferably both formed from stainless steel.

The upper end of the collar 56 is located within a chamber 60 defined by a diametrically expanded section of the bore 10 with the outer wall of the upper part of the collar 56 being spaced from the bore 10. At its upper end, the chamber 60 is closed by a cylindrical projection 62 extending from the lower surface of the upper body section 6 which extends into the chamber 60. The chamber 60 houses a plurality of coned disc springs such as Bellville springs 64 in an axially stacked formation. The springs 64 are compressed between the projection 62 at their upper end and the flange of the collar 58 at their lower end. The projection 62 is axially fixed and the collar 58 is free to slide about the valve spindle 12. The springs 64 therefore bias the collar 58 downwardly and urge it against the first spring arrangement 50 clamping and compressing it between the lower edge of the collar 56 and the step 25 in the bore 10.

The reinforcing rings 52 are formed from a first thermoplastic polymer material, which is preferably polyether ether ketone (PEEK), which is selected for its mechanical and chemical resistance properties that are retained to high temperatures. The sealing rings 54 are formed from a second thermoplastic polymer material, which is preferably Polytetrafluoroethylene (PTFE). PTFE also provides a high temperature resistance, but mechanically is softer than the PEEK material of the reinforcement rings 52. During assembly the seal assembly 50 is provided about the valve spindle 12 followed by the collar 56 and then the Bellville springs 64. As the upper body section 6 is bolted to the lower body section the projection 62 compresses the springs 64, with the axial length of the projection 62 to determining in the magnitude of compression. Once in compression the springs 64 urge the collar 56 against the seal assembly 50. The outer reinforcing rings 52 provide mechanical resistance during compression to prevent deformation at the contact points with the collar 56 and the stop ring 55. The reinforcement rings 52 are also tolerance to provide a seal between the valve spindle and the bore 10. The inner sealing rings 54 are clamped and compressed between the reinforcing rings 52 under the live loading action of the springs 64. The PTFE material of the sealing rings 54 is softer than the PEEK material of the reinforcement rings, and is selected such that during loading between the reinforcement rings 52, the PTFE material of the sealing rings begins to cold flow and wick between the outer surfaces of the reinforcement rings 52 and the inner surface of the bore 10. This cold flow wicking action of the sealing rings 54 enhances the sealing efficiency of the seal assembly 50 by closing any gap between the already tightly tolerance fitting between the reinforcement rings 52 and the bore 10. This high sealing efficiency is maintained by keeping the seal assembly 50 under live loading using the springs 64. This is made possible by providing the springs 64 within the valve body on the sealed system wet side of the valve, and by clamping them between the upper 6 and lower 4 body sections.

As the springs 64 are provided on the system wet side of the valve within the bore 10 of the valve body 2 they may potentially be exposed to sour gas emissions escaping past the seal assembly 50 and containing solid material. This is most likely to occur along the outer surface of the valve spindle 12 through pathway defined between the inner surface of the collar 56 and the outer surface of the spindle 12. To mitigate the risk of fouling of the springs 54 by deposition of solid material from any emission gases a plurality of channels are formed in the upper surface of the flange section 58 which extend radially outwards and define a plurality of fluid channels between the spindle 12 and the chamber 60. The chamber 60 is extended axially downwards from the springs and positioned proximate the base of the collar 56. The flange section 58 is spaced radially inwards of the inner wall of the chamber 60. As such, the chamber 60 defines a collection chamber in which any solid material within fugitive emission gases passing between the collar 56 and the spindle 12 may gravitationally settle and collect rather than causing fouling of the springs 64.

In addition to the first seal assembly 50, additional back up seals are provided in the form of second back up seal 65 and third back up seal 66. The second back up seal 65 is provided between the upper body section 6 and the lower body section 4 at the point of intersection between the lower surface of the upper body section 6 and the outer surface of the projection 62 extending downwardly therefrom. As such, the second back up seal 65 prevents the escape of any gases from the chamber 60 between the upper 6 and lower 4 body sections. The second seals 65 are ring seals and are preferably formed from a graphite material and are clamped between the upper 6 and lower 4 body sections during bolting these two components together.

The third seal 66 is provided about the upper stem section 28 of the spindle 12 between the upper stem section 28 and the upper bore 12 of the upper body section 6. The third seal 66 comprises a series of graphite ring seals which are axially located at their lower end against the annular projection 30. A second locking collar 68 engages and clamps the upper end of the third seal 66. The clamping pressure on the locking collar 68 is applied by the clamp member 9 which is bolted to the upper body member 6 by bolts 13. The clamp member 9 includes an engagement surface 70 which is arranged to bear down on the upper end of the locking collar 68 when the clamp member 9 is bolted to the upper body sections 6. To ensure constant compression on the locking collar 68 the bolts 13 are live loaded by providing coned disc springs such as Bellville springs beneath the head of each bolt 13 between the bolt 13 and the gland adjuster body 9. As the stem of each bolt 13 is rigid and axially fixed to the upper body section 6 the springs 72 urge the gland adjuster body 9 downwardly forcing and biasing the engagement surface 70 against the locking collar 68. The valve 1 therefore includes a first seal assembly 50 which is live loaded by series of springs provided on the system wetted side of the valve 1 within the bore 10 of the valve body 2 and a further third seal arrangement 66 which is live loaded by externally located springs 72 on the process dry side of the valve.

The third seals 66 are preferably formed from a graphite material and act as a fire safe back up with the graphite having a significantly higher melting point than the thermoplastic elements of the first seal assembly 50 but with the first seal assembly 50 providing significantly improved sealing efficiency under normal operating conditions.

Utilising the internally live loaded first seal assembly 50 with the fire safe back up seal 66, the valve 1 has been shown to operate across a pressure range of zero to a maximum rated pressure of up to Class 2,500 i.e. approximately 6,200 PSIG, and it is anticipated that a higher pressure range of 7,000 PSIG would also be acheivable. The lack of elastomeric materials such as those commonly used in O ring seals for example, with the seal assembly instead comprising PTFE and PEEK materials, and the back up seals being formed of a graphite material, enable the valve to operate within an agreed range of -20°c whilst still maintaining its Class A(HS) fugitive omissions rating. The valve has been shown to maintain Class A(HS) fugitive omissions requirement down to -50 °c under non actuated conditions.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

It will be appreciated that in further embodiments various modifications to the specific arrangements described above and shown in the drawings may be made. For example, while the valve assembly is described as a needle valve, it will be appreciated that the present invention may be applicable to other valves comprising a valve spindle, such as a ball valve.

## Claims

1. A valve assembly for controlling flow through a fluid pathway comprising:
a valve body (2) having a bore;
a spindle (20) received within the bore which is actuatable to open and close the valve, the spindle having an axially upstream end arranged towards the fluid pathway and an opposing downstream end;
a first seal (50) provided about the spindle (20) between the spindle (20) and the bore; and
a biasing element (64) arranged to impart an axial compressive force to the first seal and located within the valve body between the spindle and the bore on the downstream side of the first seal (50); the assembly comprising
a second seal (66) provided about the spindle (20) between the spindle (20) and the bore which is axially spaced along the spindle (20) at a position downstream from both the first seal (50) and the biasing element (64);
a secondary biasing element (72) for imparting a compressive force to the second seal (66);
a guide member (6) axially fixed relative to the valve body (2); and
an axially movable clamping member (9) slidingly supported about the spindle (20) at a downstream axial position from the second seal (66) and arranged such that the secondary biasing element (72) urges the clamping member (9) towards the second seal (66) to impart said compressive force thereto; and
**characterized by**: the spindle (20) comprising
an upper stem portion and a lower stem portion and the upper and lower stem portions being rotatable relative to each other such that the upper stem portion is able to actuate the lower stem portion in the axial direction only.

2. A valve assembly according to claim any preceding claim wherein the first seal (50) comprises a first section formed of a first material and a second section formed of a second material which is softer than the first material, the first and second sections being arranged such that when the first seal (50) is compressed the second material is caused to cold flow between the first section and the bore to increase the efficiency of the first seal.

3. A valve assembly according to claim 2 wherein the first seal (50) comprises support rings (52) located at axially opposing ends which are formed from the first material and define the first section and a plurality of sealing rings (54) formed from the second material axially located between the end rings (52) and defining the second section.

4. A valve assembly according to claims 2 or 3 wherein the first material is polyether ether ketone (PEEK) and the second material is preferably Polytetrafluoroethylene (PTFE).

5. A valve assembly according to any preceding claim wherein the valve assembly further comprises a collar (56) axially located about the spindle (20) on the downstream side of the first seal (50) between the first seal (50) and the biasing element (64) which is arranged to compress the seal (50) under the action of the biasing element (64).

6. A valve assembly according to any preceding claim further comprising a slidable collar (68) provided about the spindle (20) between the second seal (66) and the clamping member (9) such that the collar (68) is urged into engagement with the second seal (66) by the clamping member (9) to impart said compressive force thereto.

7. A valve assembly according to any preceding claim wherein the second seal (66) is a back up fire-safe seal formed from a material having a melting point greater than the material of the first seal.

8. A valve assembly according to claim 7 wherein the body section (2) comprises a lower section axially located at the flow wise upstream end of the valve assembly and an upper section axially located at the flow wise downstream end and the collar (56) and biasing element (64) are located within the lower body section and the biasing element (64) is axially compressed against the collar (56) by the a portion of the upper body section.

9. A valve assembly according to claim 8 wherein a third seal (65) is provided between the upper and lower body sections on the downstream side of the first seal (50).

10. A valve assembly according to claim 9 wherein the second (66) and/or third seals (65) are formed from a graphite material.

11. A valve assembly according to claim 10 wherein the second seal (66) is formed from a material having a higher melting point than the material of the first seal (50).

12. A valve assembly according to any preceding claim wherein the valve body (2) includes an inlet and an outlet and the spindle is actuatable to open and close the bore to selectively permit fluid flow between the inlet and the outlet.

## Patentansprüche

1. Ventilbaugruppe zum Steuern von Fluss durch einen Fluidweg, umfassend:
einen Ventilkörper (2) mit einer Bohrung;
eine in der Bohrung aufgenommene Spindel (20), die betätigbar ist, das Ventil zu öffnen und zu schließen, wobei die Spindel ein axial anströmseitiges Ende, das in Richtung zu dem Fluidweg angeordnet ist, und ein gegenüberliegendes abströmseitiges Ende aufweist;
eine erste Dichtung (50), die zwischen der Spindel (20) und der Bohrung um die Spindel (20) bereitgestellt ist; und
ein Vorspannelement (64), das dafür beschaffen ist, eine axiale Kompressionskraft auf die erste Dichtung auszuüben, und innerhalb des Ventilkörpers zwischen der Spindel und der Bohrung an der abströmseitigen Seite der ersten Dichtung (50) angeordnet ist;
wobei die Baugruppe umfasst:
eine zweite Dichtung (66), die zwischen der Spindel (20) und der Bohrung um die Spindel (20) bereitgestellt ist und die entlang der Spindel (20) an einer abströmseitigen Position sowohl von der ersten Dichtung (50) als auch von dem Vorspannelement (64) axial beabstandet ist;
ein sekundäres Vorspannelement (72) zum Ausüben einer Kompressionsspannung auf die zweite Dichtung (66);
ein Führungselement (6), das bezogen auf den Ventilkörper (2) axial fixiert ist; und
ein axial bewegliches Spannelement (9), das um die Spindel (20) verschiebbar an einer abströmseitigen axialen Position bezogen auf die zweite Dichtung (66) gehalten ist und so angeordnet ist, dass das sekundäre Vorspannelement (72) das Spannelement (9) in Richtung zu der zweiten Dichtung (66) drückt, um die Kompressionskraft darauf auszuüben; und
**dadurch gekennzeichnet, dass**: die Spindel (20) einen oberen Schaftabschnitt und einen unteren Schaftabschnitt umfasst und der obere und der untere Schaftabschnitt relativ zueinander drehbar sind, so dass der obere Schaftabschnitt den unteren Schaftabschnitt nur in der axialen Richtung betätigen kann.

2. Ventilbaugruppe gemäß Anspruch einem der vorstehenden Ansprüche, wobei die erste Dichtung (50) einen ersten Abschnitt, der aus einem ersten Material gebildet ist, und einen zweiten Abschnitt, der aus einem zweiten Material gebildet ist, das weicher als das erste Material ist, umfasst, wobei der erste und der zweite Abschnitt so angeordnet sind, dass, wenn die erste Dichtung (50) komprimiert wird, bewirkt wird, dass das zweite Material kalt zwischen den ersten Abschnitt und die Bohrung fließt, um die Wirksamkeit der ersten Dichtung zu erhöhen.

3. Ventilbaugruppe gemäß Anspruch 2, wobei die erste Dichtung (50) an axial gegenüberliegenden Enden angeordnete Trägerringe (52), die aus dem ersten Material gebildet sind und den ersten Abschnitt definieren, und eine Vielzahl von Dichtungsringen (54), die aus dem zweiten Material gebildet sind, axial zwischen den Endringen (52) angeordnet sind und den zweiten Abschnitt definieren, umfasst.

4. Ventilbaugruppe gemäß Ansprüchen 2 oder 3, wobei das erste Material Polyetheretherketon (PEEK) ist und das zweite Material vorzugsweise Polytetrafluorethylen (PTFE) ist.

5. Ventilbaugruppe gemäß einem der vorstehenden Ansprüche, wobei die Ventilbaugruppe ferner eine Hülse (56) umfasst, die an der abströmseitigen Seite der ersten Dichtung (50) zwischen der ersten Dichtung (50) und dem Vorspannelement (64) um die Spindel (20) angeordnet ist und dafür gestaltet ist, die Dichtung (50) unter der Wirkung des Vorspannelements (64) zu komprimieren.

6. Ventilbaugruppe gemäß einem der vorstehenden Ansprüche, ferner umfassend eine verschiebbare Hülse (68), die zwischen der zweiten Dichtung (66) und dem Spannelement (9) um die Spindel (20) bereitgestellt ist, so dass die Hülse (68) durch das Spannelement (9) in Eingriff mit der zweiten Dichtung (66) gedrückt wird, um die Kompressionskraft darauf auszuüben.

7. Ventilbaugruppe gemäß einem der vorstehenden Ansprüche, wobei die zweite Dichtung (66) eine verstärkende brandsichere Dichtung ist, die aus einem Material gebildet ist, das einen höheren Schmelzpunkt als das Material der ersten Dichtung aufweist.

8. Ventilbaugruppe gemäß Anspruch 7, wobei der Körperabschnitt (2) einen unteren Abschnitt, der axial an dem bezogen auf die Flussrichtung anströmseitigen Ende der Ventilbaugruppe angeordnet ist, und einen oberen Abschnitt, der axial an dem bezogen auf die Flussrichtung abströmseitigen Ende angeordnet ist, umfasst, und die Hülse (56) und das Vorspannelement (64) innerhalb des unteren Körperabschnitts angeordnet sind und das Vorspannelement (64) durch einen Teil des oberen Körperabschnitts axial gegen die Hülse (56) komprimiert wird.

9. Ventilbaugruppe gemäß Anspruch 8, wobei eine dritte Dichtung (65) zwischen dem oberen und dem unteren Körperabschnitt an der abströmseitigen Seite der ersten Dichtung (50) bereitgestellt ist.

10. Ventilbaugruppe gemäß Anspruch 9, wobei die zweite (66) und/oder dritte Dichtung (65) aus einem Graphitmaterial gebildet sind.

11. Ventilbaugruppe gemäß Anspruch 10, wobei die zweite Dichtung (66) aus einem Material mit einem höheren Schmelzpunkt als das Material der ersten Dichtung (50) gebildet ist.

12. Ventilbaugruppe gemäß einem der vorstehenden Ansprüche, wobei der Ventilkörper (2) einen Einlass und einen Auslass aufweist und die Spindel betätigbar ist, die Bohrung zu öffnen und zu schließen, um selektiv Fließen von Fluid zwischen dem Einlass und dem Auslass zu erlauben.

## Revendications

1. Ensemble soupape destiné à contrôler un écoulement à travers une voie de passage de fluide comprenant :
un corps de soupape (2) ayant un alésage ;
une tige (20) reçue à l'intérieur de l'alésage qui est actionnable pour ouvrir et fermer la soupape, la tige ayant une extrémité axialement amont agencée vers la voie de passage de fluide et une extrémité aval opposée ;
un premier joint d'étanchéité (50) disposé autour de la tige (20) entre la tige (20) et l'alésage ; et
un élément de rappel (64) agencé pour appliquer une force de compression axiale au premier joint d'étanchéité et situé à l'intérieur du corps de soupape entre la tige et l'alésage sur le côté aval du premier joint d'étanchéité (50) ;
l'ensemble comprenant
un deuxième joint d'étanchéité (66) disposé autour de la tige (20) entre la tige (20) et l'alésage qui est espacé axialement le long de la tige (20) à une position en aval à la fois du premier joint d'étanchéité (50) et de l'élément de rappel (64) ;
un élément de rappel secondaire (72) destiné à appliquer une force de compression au deuxième joint d'étanchéité (66) ;
un élément de guidage (6) fixe axialement par rapport au corps de soupape (2) ; et
un élément de serrage axialement mobile (9) supporté avec faculté de coulissement autour de la tige (20) à une position axiale en aval du deuxième joint d'étanchéité (66) et agencé de telle sorte que l'élément de rappel secondaire (72) pousse l'élément de serrage (9) vers le deuxième joint d'étanchéité (66) pour appliquer ladite force de compression à celui-ci ; et
**caractérisé en ce que** : la tige (20) comprend une partie de tige supérieure et une partie de tige inférieure et les parties de tige supérieure et inférieure peuvent tourner l'une par rapport à l'autre de telle sorte que la partie de tige supérieure peut actionner la partie de tige inférieure uniquement dans la direction axiale.

2. Ensemble soupape selon la revendication une quelconque revendication précédente dans lequel le premier joint d'étanchéité (50) comprend une première section constituée d'un premier matériau et une deuxième section constituée d'un deuxième matériau qui est plus mou que le premier matériau, les première et deuxième sections étant agencées de telle sorte que, quand le premier joint d'étanchéité (50) est comprimé, le deuxième matériau est soumis à un fluage à froid entre la première section et l'alésage pour augmenter l'efficacité du premier joint d'étanchéité.

3. Ensemble soupape selon la revendication 2 dans lequel le premier joint d'étanchéité (50) comprend des bagues de support (52) situées à des extrémités axialement opposées qui sont formées à partir du premier matériau et définissent la première section et une pluralité de bagues d'étanchéité (54) formées à partir du deuxième matériau situées axialement entre les bagues d'extrémité (52) et définissant la deuxième section.

4. Ensemble soupape selon la revendication 2 ou 3 dans lequel le premier matériau est la polyétheréthercétone (PEEK) et le deuxième matériau est de préférence le polytétrafluoroéthylène (PTFE).

5. Ensemble soupape selon une quelconque revendication précédente, l'ensemble soupape comprenant en outre un collier (56) situé axialement autour de la tige (20) sur le côté aval du premier joint d'étanchéité (50) entre le premier joint d'étanchéité (50) et l'élément de rappel (64) qui est agencé pour comprimer le joint d'étanchéité (50) sous l'action de l'élément de rappel (64).

6. Ensemble soupape selon une quelconque revendication précédente comprenant en outre un collier coulissant (68) disposé autour de la tige (20) entre le deuxième joint d'étanchéité (66) et l'élément de serrage (9) de telle sorte que le collier (68) est poussé en prise avec le deuxième joint d'étanchéité (66) par l'élément de serrage (9) pour appliquer ladite force de compression à celui-ci.

7. Ensemble soupape selon une quelconque revendication précédente dans lequel le deuxième joint d'étanchéité (66) est un joint d'étanchéité de secours résistant au feu formé à partir d'un matériau ayant un plus haut point de fusion que le matériau de premier joint d'étanchéité.

8. Ensemble soupape selon la revendication 7 dans lequel la section de corps (2) comprend une section inférieure située axialement à l'extrémité amont dans le sens d'écoulement de l'ensemble soupape et une section supérieure située axialement à l'extrémité aval dans le sens d'écoulement et le collier (56) et l'élément de rappel (64) sont situés à l'intérieur de la section de corps inférieure et l'élément de rappel (64) est comprimé axialement contre le collier (56) par une partie de la section de corps supérieure.

9. Ensemble soupape selon la revendication 8 dans lequel un troisième joint d'étanchéité (65) est disposé entre les sections de corps supérieure et inférieure sur le côté aval du premier joint d'étanchéité (50).

10. Ensemble soupape selon la revendication 9 dans lequel les deuxième (66) et/ou troisième (65) joints sont formés à partir d'un matériau graphitique.

11. Ensemble soupape selon la revendication 10 dans lequel le deuxième joint d'étanchéité (66) est formé à partir d'un matériau ayant un plus haut point de fusion que le matériau du premier joint d'étanchéité (50).

12. Ensemble soupape selon une quelconque revendication précédente dans lequel le corps de soupape (2) comporte une entrée et une sortie et la tige est actionnable pour ouvrir et fermer l'alésage pour permettre sélectivement un écoulement de fluide entre l'entrée et la sortie.
